# EUROPEAN PATENT APPLICATION

(11) **EP 1 112 840 A1**
(43) Date of publication of application: **04.07.2001**
(21) Application number: 00307816.9
(22) Date of filing: 11.09.2000
(51) Int. Cl.: B32B 17/10, C03C 27/12

(54) **Laminated glass, method and apparatus for manufacturing the same**

(30) Priority: 29.12.1999 KR 6535699; 18.02.2000 KR 0007951; 22.08.2000 KR 0048602
(71) Applicant: P & H Glass Co., Ltd., Seoul, 135-080 (KR)
(72) Inventor: Jang, Hyung Gyu, Kangnam-gu, Seoul, 135-080 (KR); Ha, Hwang Doo, Nowon-gu, Seoul, 139-220 (KR)
(74) Representative: Ertl, Nicholas Justin

(57) **Abstract**

The present invention relates to laminated glass with a plastic intermediate material having adhesiveness interposed between and integrated with two or more glass sheets by pressurization, and a method and apparatus for manufacturing the laminated glass.

The laminated glass according to the present invention includes a first glass sheet, a second glass sheet, and a plastic intermediate material interposed between the first and second glass sheets and press-bonded to the first and second sheets via coatings of adhesives formed on both sides of the intermediate material. A method for manufacturing laminated glass according to the present invention includes the steps of sequentially loading a first glass sheet and a second glass sheet on a conveyor belt; cleaning and drying the first and second glass sheets; lifting the first glass sheet by a fixing device at a predetermined location; bonding a plastic intermediate material with adhesives coated on both sides thereof to the second glass sheet carried by the conveyor belt and carrying it directly below the fixing device; lowering the fixing device and bonding the first glass sheet to an upper surface of the intermediate material bonded to the second glass sheet; and integrating the intermediate material with the first and second glass sheets by pressing the first and second glass sheets bonded via the intermediate material. According to the present invention, since the manufacturing process of the invention is performed at room temperature, the present invention remarkably reduces time required for the manufacturing process. In addition, the present invention is more compatible with the environment and more cheaper. Furthermore, the ratio of stiffness to weight of the laminated glass of the invention is several times larger than that of the conventional bulletproof glass.

## Description

### Field of Invention

The present invention relates to laminated glass, and a method and apparatus for manufacturing the laminated glass, and more particularly to laminated glass with a plastic intermediate material having adhesiveness interposed between and integrated with two or more glass sheets by pressurization, and a method and apparatus for manufacturing the laminated glass.

### Background of Invention

Glass for minimizing damage to a human body when broken is commonly referred to as safety glass, and there is a tendency for the market share of the safety glass to continuously increase in the worldwide market. In particular, an advanced country regulates the application of safety glass to all buildings by law. The safety glass includes reinforced glass, resin glass and laminated glass. The reinforced glass means glass which is formed by heating it at high temperature (600°C or more) and rapidly cooling it and may have a particle size of a half of a nail of a little finger upon breakage thereof to reduce damage to a human body. The reinforced glass is used for building materials such as a door through which many people frequently pass and automobile glass for protecting a passenger in an automobile.

However, since the reinforced glass can be manufactured only in requested sizes, it is difficult to mass-produce and recycle it. This results from the breakage of the reinforced glass simultaneous with the cutting of the reinforced glass in a predetermined size. Therefore, the size of the reinforced glass cannot be changed, so that the reinforced glass may be used only in an originally produced size.

The resin glass means glass wherein a liquid resin, which is bonded while being solidified upon exposure to ultraviolet rays, is injected in between glass sheets. The resin glass is formed by adhering a both-sided tape of a predetermined thickness to edges of the glass sheets to prevent leakage of the liquid resin and injecting the liquid resin into an empty space between the glass sheets. Similarly to the reinforced glass, it is difficult to mass-produce the resin glass.

On the other hand, conventional laminated glass was manufactured by inserting a polyvinylbutyral (PVB) film in between two glass sheets, softening the PVB film by means of applying high temperature and pressure to it for 3 hours, and bonding the softened PVB film to the glass sheets. Generally, PVB films having three kinds of thickness shown in a table below were used, and laminated glass manufactured by inserting a thicker film in between glass sheets is used as bulletproof glass.

**Table 1**

| PVB film thickness | Structure | Total thickness |
|---|---|---|
| 0.38mm | 3mm glass sheet + 0.38mm PVB film + 3mm glass sheet | 6.38mm laminated glass |
| 0.76mm | 3mm glass sheet + 0.76mm PVB film + 3mm glass sheet | 6.76 laminated glass |
| 1.52mm | 3mm glass sheet + 1.52mm PVB film + 3mm glass sheet | 7.52mm laminated glass |

In Table 1, the PVB film having a thickness of 0.38mm is mainly used for laminated glass for a general building, and the PVB film having a thickness of 1.52mm is mainly used for bulletproof glass.

However, the PVB is a harmful material in terms of the environment and the international price of the raw material of PVB is also relatively high (3200 ~ 3500$/ton). In addition, since thermal bonding is used in the course of producing the laminated glass, the processing period required for the thermal bonding is lengthened, and thus, there is a drawback in that their productivity is lowered. That is, it is necessary to process an intermediate material under high temperature and pressure, which involves a long-time process. Thus, there is a problem that the number of times of production normally does not exceed eight (8) times per 24 hour operation a day.

### Summary of Invention

The present invention is to solve the above problem in the prior art. The object of the invention is to provide laminated glass which can be mass-produced in a desired size and is compatible with the environment, recyclable and cheap.

Another object of the invention is to provide laminated glass having superior stiffness relative to weight.

The further object of the invention is to provide a method and apparatus for manufacturing laminated glass, wherein the required processing period can be relatively shortened.

To achieve the aforementioned objects, laminated glass according to the present invention includes a first glass sheet, a second glass sheet, and a plastic intermediate material interposed between the first and second glass sheets and press-bonded to the first and second sheets via coatings of adhesives formed on both sides of the intermediate material.

Further, a method for manufacturing laminated glass according to the present invention includes the steps of sequentially loading a first glass sheet and a second glass sheet on a conveyor belt; cleaning and drying the first and second glass sheets; lifting the first glass sheet by a fixing device at a predetermined location; bonding a plastic intermediate material with adhesives coated on both sides thereof to the second glass sheet carried by the conveyor belt and carrying it directly below the fixing device; lowering the fixing device and bonding the first glass sheet to an upper surface of the intermediate material bonded to the second glass sheet; and integrating the intermediate material with the first and second glass sheets by pressing the first and second glass sheets bonded via the intermediate material.

Further, an apparatus for manufacturing laminated glass according to the present invention includes a means for cleaning and drying a glass sheet carried by a conveyor belt; a dispenser consisting of a plurality of rollers disposed downstream of the cleaning and drying means for bonding a plastic intermediate material with the coatings of the adhesives formed on both sides thereof to the glass sheet; a fixing device disposed downstream of the dispenser for going up and down in the direction perpendicular to the moving direction of the conveyor belt with another glass sheet hung on the fixing device and bonding the other glass sheet to the glass sheet with the intermediate material bonded thereon; and a pressing means disposed downstream of the fixing device for passing the two glass sheets bonded by the fixing device and applying pressure thereto.

### Brief Description of the Drawings

Figure 1 is a sectional perspective view of a portion of the laminated glass according to the present invention;
Figure 2 is an exploded perspective view of the laminated glass according to the present invention; and
Figure 3 is a schematic view showing the constitution of an apparatus for manufacturing the laminated glass according to the present invention.

### Detailed Description for Preferred Embodiment

Hereinafter, preferred embodiments of laminated glass, and a method and apparatus for manufacturing the laminated glass according to the present invention will be explained in detail with reference to the accompanying drawings,

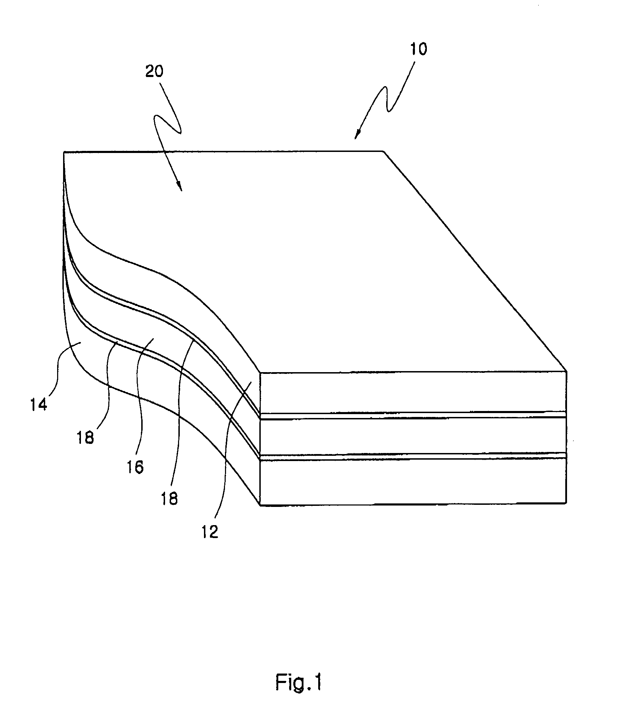

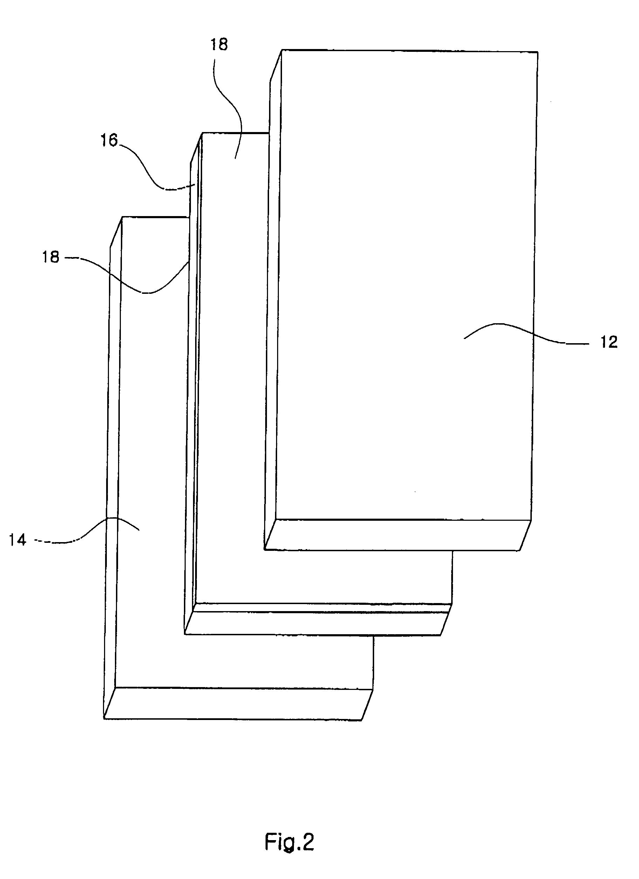

Figure 1 is a sectional view of a portion of the laminated glass according to the present invention, and Figure 2 is an exploded perspective view of the laminated glass according to the present invention. As shown in the figures, the laminated glass (10) according to the present invention consists of a first glass sheet (12), a second glass sheet (14), and a plastic intermediate material (16) interposed between the first and second glass sheets (12, 14). The thickness of the glass sheets used for the present invention is about 2mm or more, and one side of each of the first and second glass sheets (12, 14) is bonded to adhesives (18) on both sides of the intermediate material (16), respectively. That is, the structure of the laminated glass (10) according to the present invention consists of the first glass sheet (12), the adhesive (18), the intermediate material (16), the adhesive (18) and the second glass sheet (14) in this order.

On the other hand, the thickness of the intermediate material (16) used for the present invention is 0.025mm or more, and a polymer can be used for the intermediate material. The polymer may include polyethylene terephthalate (PET), polyethylene (PE), polybutylene tercphthalatc (PBT), polyvinyl chloride (PVC), polyethylene naphthalatc (PEN), ethylene vinyl acetate (EVA), polycarbonate (PC), polyvinyl alcohol (PVA), polypropylene (PP), Ionomer (IO), polymethylpentene (PMP), polystyrene (PS), polyvinylidene chloride (PVDC), polymethyl methacrylatc (PMMA), ethylene vinyl alcohol (EVA), ethylene-acrylic acid (EAA), cthylene-methyl methacrylate (EMMA), ethylene-methyl acrylate (EMA), ethylene methacrylic acid (EMAA), ethylene-ethyl acrylate (EEA), poly acrylonitrile (PAN), polyphenylenesulfide (PPS), polyphenylene ether (PPE), polyestersulfone (PES), polyetheretherketone (PEEK), polytherimide (PEI), polyamide-imide (PAI), polyimide (PI), polymer alloy, cellophane, polyamide (PA), nylon, polyvinylbutyral (PVB), etc. The plastic intermediate material (16) of the present invention is made of a single sheet.

The coatings of the adhesives (18) are applied to both sides of the plastic intermediate material (16). The coatings of the adhesives (18) serve to couple the first and second glass sheets (12, 14) with the plastic intermediate material (16). Although, as a suitable adhesive, there are an adhesive containing acrylic as a main component and an adhesive containing polyurethanc as a main component, other adhesive may be used. The thickness of the coatings of the adhesives (18) used for the present invention is at least 10µm.

Although the intermediate material (16) is explained only in the form of a single sheet in the embodiment shown in Figures 1 and 2, the intermediate material (16) may used in the form of two or more sheets bonded by an adhesive. Further, although Figures 1 and 2 show the structure of the laminated glass with the only one plastic intermediate material (16) interposed between the first and second glass sheets (12, 14), laminated glass with more intermediate material and glass sheets bonded to each other may be used. That is, laminated glass including three-fold glass has a cross-section consisting of "glass, an adhesive, an intermediate material, an adhesive, glass, an adhesive, an intermediate material, an adhesive, glass" in this order, and four-, five- or more fold glass having a similar cross-section formed in such order may be freely constructed according to its purposed use.

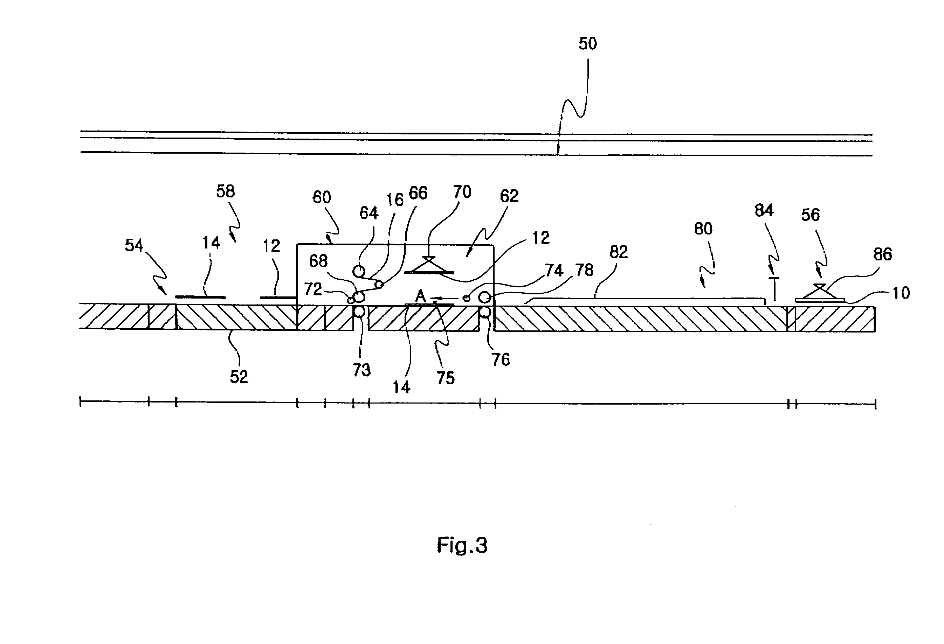

Figure 3 is a schematic view showing the constitution of an apparatus for manufacrturing the laminated glass according to the present invention. The apparatus (50) of the invention will be explained with reference to Figure 3. Elements of the apparatus (50) will be explained in such order that the first glass sheet (12) and the second glass sheet (14) are bonded along a conveyor belt (52) of the apparatus (50).

The apparatus (50) of the invention includes a conveyor belt (52), a beginning process station (54), a cleaning and drying process station (58), a bonding process station (60), a drying process station (80), a cutting process station (84) and a final process station (56). The bonding process station (60) includes a dispenser (64, 66, 68) for dispensing the plastic intermediate material, and a pressing device (76, 78) for applying pressure to the glass sheets and the intermediate material.

The conveyor belt (52) carries the first and second glass sheets (12, 14) from the beginning process station (54) to the final process station (56). The cleaning and drying process station (58) follows the beginning process station (54). In the cleaning and drying process station (58), a foreign substance on surfaces of the first and second glass sheets (12, 14) is cleaned and removed and then a drying operation is performed for eliminating moisture remaining after the cleaning.

The bonding process station (60) follows the cleaning and drying process station (58). The bonding process station (60) is placed within a clean room (62), The clean room (62) is provided as facilities for preventing a foreign substance from sticking on the surfaces of the cleaned first and second glass sheets (12, 14).

A roll (64) for feeding the plastic intermediate material (16) is placed at an entrance of the bonding process station (60). The plastic intermediate material (16) is fed with the coating of the adhesive covered on each of surfaces thereof, and each of surfaces of the coatings of the adhesives is covered with a release paper. The release paper is peeled off by peelers constructed by rollers (72, 74) which will be described later. The peelers consist of a first peeler and a second peeler. The first peeler placed adjacent to the roller (72) peels off the release paper attached to a first surface of the plastic intermediate material (16), and the second peeler peels off the release paper attached to a second surface of the plastic intermediate material (16). The first peeler includes the roller (72) and the second peeler includes the roller (74).

The plastic intermediate material (16) with the adhesives (18) and the release papers attached thereto is wound on the roll (64). The plastic intermediate material (16) with the adhesives (18) and the release papers attached thereto passes along guide rollers (66, 68).

A fixing device (70) for lifting the first glass sheet (12) is also disposed within in the bonding process station (60). The roller (72) is placed downstream of the guide roller (68) and peels off the release paper with which one side surface of the plastic intermediate material (16) is covered. The other roller (74) for peeling off the release paper with which the other side surface of the plastic intermediate material (16) is covered is placed upstream of rollers (76, 78) which are a final portion of the bonding process station (60). A roller (73) is placed below the guide roller (68) and serves to move the first and second glass sheets (12, 14) in accordance with the process.

The rollers (76, 78) construct the pressing device, and although the roller (78) adjusts pressure, the roller (76) may in fact adjust pressure. The pressure applied at this time is varied depending on the size and thickness of glass to be manufactured, the size and thickness of the intermediate material, the kind of the adhesive or the like, and is usually about 1 bar, but may be increased up to 3 bar when more stiffer glass is used. The rollers (76, 78) are placed at the final portion of the bonding process station (60).

The drying process station (80) is placed downstream of the rollers (76, 78) and outside of the clean room (62). There is a drying lamp array (82) in the drying process station (80). An ultraviolet discharging lamp is used for the drying lamp.

The cutting process station (84) is placed downstream of the drying process station (80) and cuts the plastic intermediate material (16). The final process station (56) is placed downstream of the cutting process station (84). In the final process station (56), a demounting device (86) demounts the laminated glass from the apparatus (50). Generally, a sucking device is used for the demounting device (86).

A method for manufacturing the laminated glass according to the present invention by using the apparatus constructed as aforementioned will be explained with reference to Figure 3.

The method for manufacturing the laminated glass according to the present invention includes a loading process, a cleaning and drying process, a bonding process, a drying process, a cutting process, and a final demounting process, which will be explained in detail hereinafter.

In the loading process, the first and second glass sheets (12, 14) arc loaded on the conveyor belt (52) in the beginning process station (54) of the apparatus. In the cleaning and drying process, a foreign substance on the surfaces of the first and second glass sheets (12, 1.4) is removed and then the first and second glass sheets (12, 14) are dried, in the cleaning and drying process station (58). The surface cleaning and drying process is performed for previously preventing the occurrence of inferior goods due to the presence of a foreign substance upon bonding the intermediate material (16) with the glass sheets, as described later.

After the cleaning and drying process, the first and second glass sheets (12, 14) enter the clean room (62) within the bonding process station (60) and are bonded with each other. The first glass sheet (12) passes through between the rollers (68, 73), stops once it reaches a bonding position (75) on the conveyor belt (52) within the bonding process station (60), and then is lifted by the fixing device (70). The bonding position (75) is located between the roller (68, 73) and the roller (76, 78), and more accurately, directly below the fixing device (70). Generally, a sucking device is used for the fixing device (70). The first glass sheet (12) is lifted by the fixing device (70) at the bonding position (75).

Then, the second glass sheet (14) passes through between the rollers (68, 73), and simultaneously, the plastic intermediate material (16) is unwound from the feeding roller (64) and moves along the guide rollers (66, 68). When the plastic intermediate material (16) covered with release papers passes through the guide roller (68), the release paper on an underside of the intermediate material (16) is peeled off by the roller (72) so that the coating of the adhesive (18) on the underside of the intermediate material (16) is exposed. That is, the roller (72) serves to peel off the release paper on the underside of the intermediate material (16).

When the coating of the adhesive (18) on the underside of the intermediate material (16) is exposed, the second glass sheet (14) is carried so that the upper surface of the second glass sheet (14) may be attached to the underside of the intermediate material (16). When the second glass sheet (14) passes through between the rollers (68, 73) and reaches the bonding position (75), the upper surface of the second glass sheet (14) is in attachment to the underside of the intermediate material (16). That is, the release paper of the intermediate material (16) is peeled off by the roller (72), and the underside of the intermediate material (16) is attached to the upper surface of the second glass sheet (14), which, in turn, reaches the bonding position (75). At this condition, the second glass sheet with the intermediate material (16) attached thereon has a cross-section consisting of the release paper (not shown), the adhesive (18), the intermediate material (16), the adhesive (18) and the second glass sheet in this order from the top thereof.

Once the second glass sheet (14) reaches the bonding position (75), the roller (74) peels off the other release paper which still remains at the upper surface of the plastic intermediate material (16). The roller (74) moves in the direction of the arrow A and peels off the release paper to expose the coating of the adhesive (18) on the upper surface of the plastic intermediate material (16). Once the coating of the adhesive (18) on the upper surface of the plastic intermediate material (16) is exposed, the first glass sheet (12) is lowered by the fixing device and covers the coating of the adhesive (18) on the upper surface of the plastic intermediate material (16).

The first and second glass sheets (12, 14) with the intermediate material (16) interposed therebetween pass through between the rollers (78, 76). The rollers (78, 76) press and pass the first and second glass sheets (12, 14) together with the plastic intermediate material (16) to form the laminated glass (10). The pressure applied to the laminated glass can be adjusted by the rollers (78, 76) and is usually lbar. However, any suitable pressure may be used so as long as the first and second glass sheets (12, 14) can be attached to the intermediate material (16) without breakage. That is, the applied pressure can be increased up to 3 bar if more stiffer glass is used. As a roller driving method, a mechanical method for adjusting the pressure by using a screw, a screw jack or a gear and a method for adjusting the pressure by using hydraulic or pneumatic pressure are employed. Further, it is possible to employ a method for pressing the laminated glass by drawing or pushing and sliding a stationary roller using a surface active agent on the surface of the glass without rolling the roller.

Once the laminated glass (10) passes through between the rollers (76, 78), it leaves the clean room (62) and is carried to the drying process station (80). In the drying process station (80), the drying lamp (82) dries the laminated glass (10). This process makes the adhesive (18) more fully attached to the first and second glass sheets (12, 14).

The laminated glass (10) passes through the drying process station. (80) and then is carried to the cutting process station (84). In the cutting process station (84), the plastic intermediate material (16) is cut. The laminated glass (10) is completed at the cutting process station (84).

The laminated glass (10) passes through the cutting process station (84) and then is carried to the final process station (56). In the final process station (56), the demounting device (86) demounts the laminated glass (10) from the apparatus (50). A conventional mechanism, i.e., a sucking device, is used for the demounting device (86).

In the laminated glass (10) completed by the series of the processes as such, the degree of transparency and the color of the completed laminated glass can be easily adjusted by the intermediate material (16) and the adhesive (18).

Although the above embodiment employs a roller pressing method as a bonding method for the laminated glass, a press-plate pressing method, a vacuum pressing method, an adhesive direct-application pressing method, or the like can be employed, which will be explained in detail hereinafter.

The press-plate pressing method is a method wherein the glass sheets and the intermediate material are located on a predetermined bonding position and then pressed by the press-plate. The size of the press-plate is identical to or greater than that of the corresponding glass sheets, and the pressure applied by the press-plate is adjusted depending on the thickness and size of the glass and the film thickness. As a driving method, hydraulic pressure, pneumatic pressure, a screw, a gear, or the like can be used.

The vacuum pressing method is a method wherein the roller pressing method, the press-plate pressing method, or the like is performed in a vacuum chamber to enhance the effect of pressing.

The adhesive direct-application pressing method is a method wherein an adhesive is directly applied on a glass film by using a sprayer and water is not required since the adhesive is directly applied.

According to the laminated glass, and the method and apparatus for manufacturing the laminated glass of the present invention, since the manufacturing process of the invention is performed at room temperature, the drawback of the conventional method for manufacturing the laminated glass under high temperature and pressure can be overcome. That is, the conventional process requires several hours for heat treatment and pressing treatment, whereas the present invention remarkably reduces time required for the manufacturing process and dramatically enhances the productivity of the laminated glass. In addition, since the present invention can employ a cheap intermediate material which is more compatible with the environment, conventional building materials and automobile safety glass can be replaced with the laminated glass of the invention. Furthermore, since the ratío of stiffness to weight of the laminated glass of the invention is several times larger than that of the conventional bulletproof glass, the weight of the automobile bulletproof glass, which is the most critical point of the conventional automobile bulletproof glass, can be dramatically reduced.

The characteristic comparison of the laminated glass according to an embodiment of the present invention using PET as the intermediate material with conventional laminated glass using PVB as the intermediate material is shown in Table 2 below.

**Table 2**

| | PVB | PET |
|---|---|---|
| Environment | Harmful to the environment | Compatible with the environment |
| Bonding method | Thermal bonding | Adhesive bonding |
| Ratio of stiffness to weight (assuming that PVB has 1) | 1 | 3 or more |
| International price ($/ton) | 3200 ~ 3500 | 750 ~ 850 |
| Ability of coloring | Only coloring | Coloring + Printing |
| Thickness when used as bulletproof glass | 46mm or more 46mm or more | 26mm 26mm |

Although the present invention has been described with reference to the above preferred embodiments, it should be understood that any changes or modifications may be made without departing from the scope and spirit of the invention and that they will be within the scope of the present invention which is defined in the claims attached hereto.

## Claims

1. Laminated glass comprising:
a first glass sheet,
a second glass sheet, and
a plastic intermediate material interposed between said first and second glass sheets and press-bonded to said first and second sheets via coatings of adhesives formed on both sides of said intermediate material.

2. The laminated glass as claimed in Claim 1, wherein said plastic intermediate material is a PET material.

3. A method for manufacturing laminated glass, comprising the steps of:
sequentially loading a first glass sheet and a second glass sheet on a conveyor belt;
clcaning and drying said first and second glass sheets;
lifting said first glass sheet by a fixing device at a predetermined location;
bonding a plastic intermediate material with adhesives coated on both sides thereof to said second glass sheet carried by said conveyor belt and carrying it directly below said fixing device;
lowering said fixing device and bonding said first glass sheet to an upper surface of said intermediate material bonded to said second glass sheet; and
integrating said intermediate material with said first and second glass sheets by pressing said first and second glass sheets bonded via said intermediate material.

4. An apparatus for manufacturing laminated glass, comprising:
a means for cleaning and drying a first glass sheet and a second glass sheet carried by a conveyor belt;
a dispenser consisting of a plurality of rollers disposed downstream of said cleaning and drying means for bonding a plastic intermediate material with coatings of adhesives formed on both sides thereof to said second glass sheet;
a fixing device disposed downstream of said dispenser for going up and down in the direction perpendicular to the moving direction of said conveyor belt with said first glass sheet hung on said fixing device and bonding said first glass sheet to said second glass sheet with said intermediate material bonded thereon; and
a pressing means disposed downstream of said fixing device for passing said first and second glass sheets bonded by said fixing device and applying pressure thereto.
